# EUROPEAN PATENT SPECIFICATION

(11) **EP 3 898 104 B1**
(45) Date of publication and mention of the grant of the patent: **16.07.2025**
(21) Application number: 19831987.3
(22) Date of filing: 20.12.2019
(51) Int. Cl.: B25B 29/02

(54) **SYSTEM FOR TENSIONING AT LEAST ONE CONNECTING ELEMENT**
SYSTEM ZUM SPANNEN MINDESTENS EINES VERBINDUNGSELEMENTS
SYSTÈME DE MISE SOUS TENSION D'AU MOINS UN ÉLÉMENT DE LIAISON

(30) Priority: 21.12.2018 GB 201820999
(43) Date of publication of application: 27.10.2021
(73) Proprietor: Caterpillar Energy Solutions GmbH, 68167 Mannheim (DE)
(72) Inventor: GUISASOLA, Inigo, 68167 Mannheim (DE)
(74) Representative: Novagraaf Group
(86) International application number: PCT/EP2019/025471
(87) International publication number: WO 2020/126094

(56) References cited:
- EP-A1- 2 289 663
- WO-A1-2017/016654
- US-A- 4 047 456
- US-A1- 2015 314 431

## Description

### Technical Field

The present invention refers to a system for tensioning and/or loosening at least one tensable connecting element, such as a screw connection, fastened to a component to be tightened.

### Technological Background

Tensable connecting elements, such as tensable screw connections, for tightening or connecting components are well known. Specifically, for installing such tensable connecting elements, the use of screw tensioning devices is known, for example, in the field of steel constructions and various engine design applications. These screw tensioning devices generally operate based on a torque-free tensioning method, according to which pulling forces are used to lengthen large screws or bolts in an elastic range during installation such that, upon releasing the pulling forces, the connecting elements retract at least partially and thereby apply tensional forces onto the components to be tightened.

For example, in a known use of the screw tensioning devices, at first, a first end of a screw is connected to a first component via a threaded means. Then, a second component to be fastened to the first component is provided such that a threaded rod of the screw extends therethrough. Via a second end of the screw, a nut is placed on the screw so as to be engaged to the threaded rod. Thereafter, the second end of the screw is engaged to the screw tensioning device and a pulling force is applied thereto so as to elastically lengthen the screw. In this lengthened state, the nut is further tightened such that, upon releasing the pulling force applied to the screw, the screw together with the nut apply a tensional force for frictional connecting the first to the second component.

Such a screw tensioning device, for example, is known from US 2018/0215022 A1. In the known device, hydraulically induced pulling forces are used for tensioning a screw connecting element engaged to a fixation element of the tensioning device. Specifically, the known device comprises a support element configured to support the fixation element against a component to be tightened during tensioning operation. The fixation element is arranged to be movable relative to the support element so as to apply tension or to remove tension from the screw. Further, a piston is provided which is accommodated and movable within the fixation element along a longitudinal axis of the tensioning device. For hydraulically actuating the fixation element, a volume containing a fluid is delimited by and provided in a space between the piston, the fixation element and the support element. In this configuration, the piston is arranged such that a movement thereof relative to the fixation element manipulates the volume and thereby translationally actuates the fixation element relative to the support element. More specifically, the volume comprises two distinct portions, namely a piston portion delimited by the piston and the fixation element and an effective portion delimited by the fixation element and the support element which are fluid-communicatively connected. An effective base area of the piston portion is smaller than an effective base area of the effective portion, each of which is perpendicular to a movement direction of both the piston and the fixation element. By this configuration, the actuating force applied onto the piston is hydraulically transformed into a force acting on the fixation element which is higher compared to that one acting on the piston. In this way, the pulling force for tensioning the screw is generated by multiplying the actuating force applied to the piston.

However, the use of the known screw tensioning devices for fastening connecting elements may be time-consuming for an operator, i.e. in applications, where more than one tensable connecting element is to be fixed.

### Summary of the Invention

In view of the prior art, it is an objective to provide a new system for tensioning at least one connecting element. An additional objective may be to provide a system which may have an increased operability and which may enable time-efficient assembly of tensable connecting elements.

This object is solved by means of a system for tensioning at least one connecting element having the technical features of claim 1. Preferred embodiments are set forth in the present specification, the Figures as well as the dependent claims.

Accordingly, a system is provided for tensioning at least one connecting element fastened to a component to be tightened. The system comprises at least one connecting element tensioning device, i.e. a device for tensioning a connecting element, having an engagement element connectable to the connecting element and an actuating unit for translating a rotational movement applied to an actuating element into a translational movement of the engagement element relative to the component, wherein in a state in which the engagement element is connected to the connecting element, the actuating unit is configured to apply a tensioning force to the connecting element upon translationally moving the engagement element, wherein the actuating unit comprises a fluid chamber for receiving a fluid, and a piston which delimits the fluid chamber and which is translationally guided in the engagement element, and wherein the actuating unit is configured for manipulating a volume of the fluid chamber by translationally actuating the piston so as to move the engagement element relative to the support element. The system further comprises at least one electric actuator for rotationally actuating the actuating element and a control unit configured to selectively control operation of the electric actuator by directing control signals thereto, wherein the control unit is configured to actuate the at least one electric actuator in dependence on a pressure prevailing in the fluid chamber of the at least one tensioning device.

### Brief Description of the Drawings

The present disclosure will be more readily appreciated by reference to the following detailed description when being considered in connection with the accompanying drawings in which:
Figure 1 schematically shows a system for simultaneously tensioning and screwing two connecting elements; and
Figure 2 schematically shows a cross-sectional view of a screw tensioning device employed in the system depicted in Figure 1; and
Figure 3 schematically shows an enlarged view of the screw tensioning device depicted in Figure 2.

### Detailed Description of Preferred Embodiments

In the following, the invention will be explained in more detail with reference to the accompanying Figures. In the Figures, like elements are denoted by identical reference numerals and repeated description thereof may be omitted in order to avoid redundancies.

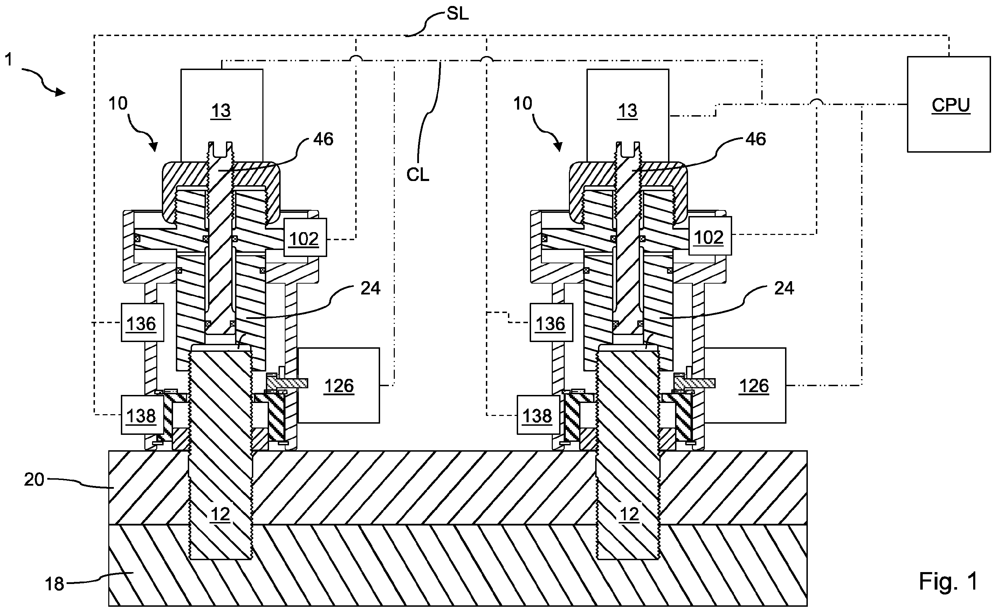

Figure 1 schematically shows a system 1 having at least two screw tensioning devices 10 for simultaneously tensioning and screwing two connecting elements 12 provided in the form of screw connections. The screw tensioning devices 10 are actuated by means of two electric actuators 13, each of which is connected to one screw tensioning device 10. For controlling the actuation of the electric actuators 13 and thus for controlling the operation of the screw tensioning devices 10, the system 1 further comprises a control unit CPU connected to each one of the electric actuators 13 by means of a control line CL for transmitting control signals thereto. Specifically, by directing control signals to the electric actuators 13, the control unit CPU selectively controls operation of the electric actuators 13 and thus of the screw tensioning devices 10. In other words, the control unit 1 is configured to operate each one of the screw tensioning devices 10 independent from the operation of the other one or the tensioning devices 10. For example, the control unit CPU is suitable to operate the screw tensioning devices simultaneously and/or successively.

Although the shown configuration is equipped with two screw tensioning devices 10, the proposed system 1 is not limited thereto. Rather, the system 1 may comprise or be equipped with any number of screw tensioning devices 10 and associated electric actuators 13. For example, the system 1 may comprise one screw tensioning device 10 and one associated electric actuator 13. Alternatively the system 1 may comprise more than one, for example four or more than four screw tensioning devices 10 and associated electric actuators 13.

The shown system 1 may be used to actuate or operate the screw tensioning devices 10 so as to tension, i.e. preload, and/or loosen, i.e. untighten, two tensable screw connections. In the context of the present disclosure, the term "tensable" refers to a material property indicating that a component, i.e. a screw connection, at least partially, is capable of being elastically expanded and thus of storing an amount of elastic energy when being subjected to a tensioning force.

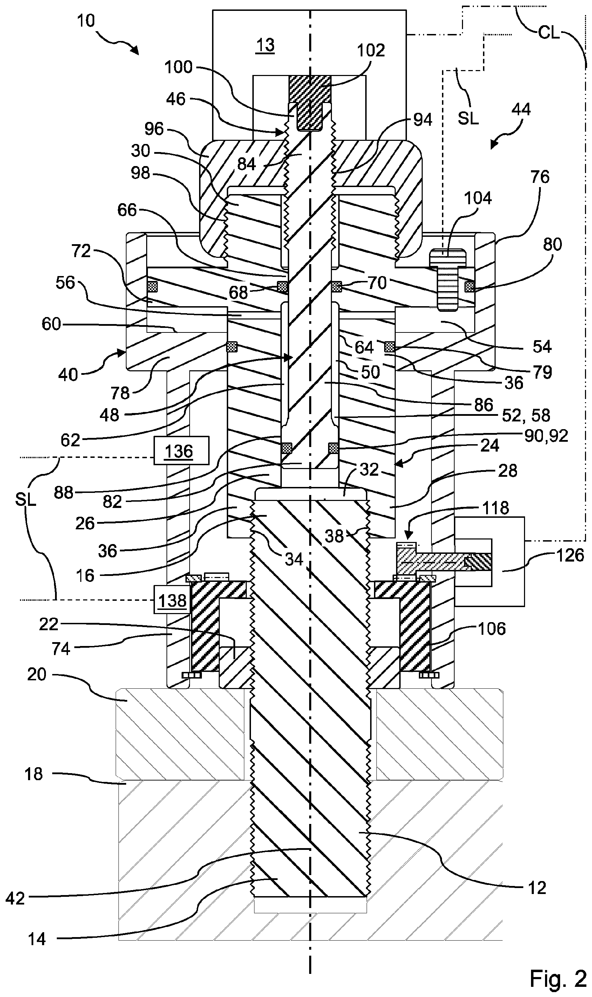

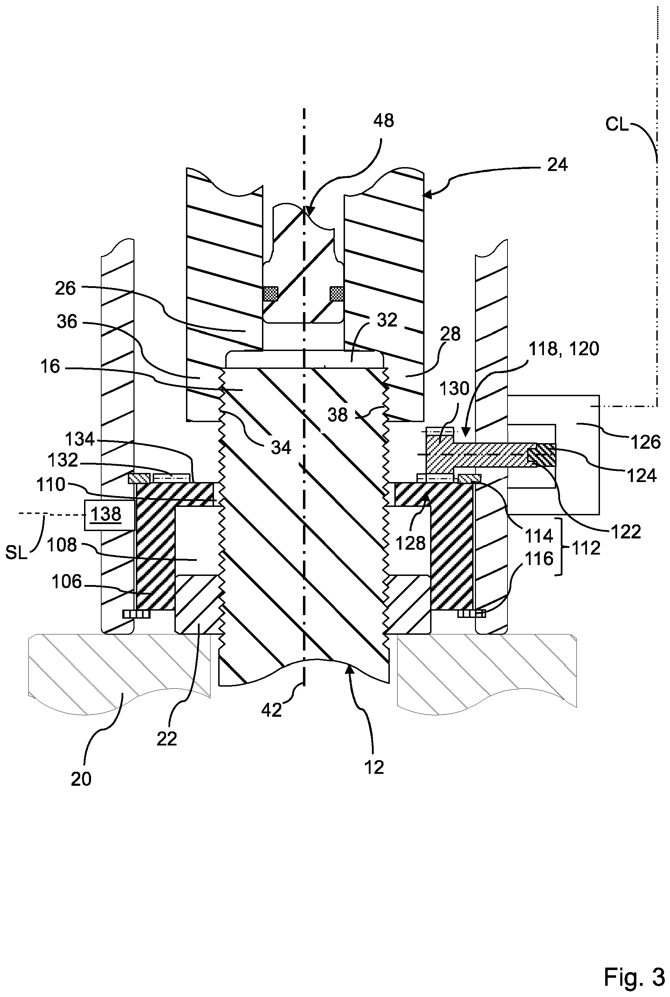

In the shown system 1, two structurally identical screw tensioning devices 10 are used, the structure and operation of which is further specified in the following under reference to Figures 2 and 3.

Figure 2 schematically shows a cross-sectional view of one screw tensioning device 10 provided in the system 1 which is configured for tensioning end screwing, i.e. tightening, one connecting element 12 in the form of a tensable screw and thus for forming a screw connection.

Specifically, the connecting element 12 comprises a first end 14, an opposed second end 16 and an elastic part positioned between the first end 14 and the second end 16. The elastic part is capable of being elastically lengthened when the connecting element 12 is subjected to a pulling or tensioning force by means of the screw tensioning device 10.

The connecting element 12 is configured for connecting, i.e. force- and/or form-fittingly connecting, a first component 18 to a second component 20. Specifically, the first end 14 of the connecting element 12 is configured to be connected to the first component 18 by means of a threaded engagement, as depicted in Figure 2. The elastic part of the connecting element 12 extends through the second component 20 such that the second end 16 of the connecting element 12 is positioned on a side of the second component 20 facing away from the first component 18. For connecting the first and the second component 18, 20, a nut 22 is provided which is in threaded engagement with the elastic part of the connecting element 12. The term "nut" in the context of the present disclosure generally refers to any type of fastener configured for being engaged with a screw by a threaded engagement. In the shown configuration, the nut 22 is provided in the form of a hexagon nut.

The screw tensioning device 10 comprises an engagement element 24 connectable to the connecting element 12. Specifically, the engagement element 24 includes a cylindrical portion 26 having a first end 28 and a second end 30. At the first end 28, the engagement element 24 includes a cylindrical recess 32 to house the second end 16 of the connecting element 12, while the first end 14 of the connecting element 12 is connected to the first component 18. The recess 32 includes internal threads 34 formed on a side wall 36 of the engagement element 24 to engage with complementary threads 38 formed at the second end 16 of the connecting element 12.

Further, the screw tensioning device 10 comprises a support element 40 configured to support the screw tensioning device 10 against the second component 20 and to translationally guide the engagement element 24 relative to the first and second component 18, 20. In other words, the engagement element 24 is translationally movable relative to the support element 40 along a longitudinal axis 42 of the screw tensioning device 10. Specifically, upon translationally moving the engagement element 24 relative to the support element 40, a tensioning force may be applied to or may be removed from the connecting element 12 fixed to the engagement element 24.

The screw tensioning device 10 further comprises an actuating unit 44 for translating a rotational movement applied to an actuating element 46 into a translational movement of the engagement element 24 relative to the first and the second component 18, 20 to be tightened and thus relative to the support element 40. In other words, the actuating unit 44 is provided so as to actuate the engagement element 24 relative to the support element 40.

In the following, the structure and operation of the actuating unit 44 will be explained in more detail. The actuating unit 44 is hydraulically actuated. In other words, a hydraulic fluid is used to transfer motive power so as to move the engagement element 24 relative to the support element 40. For doing so, the actuating unit 44 comprises a piston 48 accommodated within and movable relative to the engagement element 24 along the longitudinal axis 42. Further, a fluid chamber 50 accommodating the fluid is provided which is delimited by the piston 48, the engagement element 24 and the support element 40. In this configuration, the actuating unit 44 is designed such that a translational movement of the piston 48 manipulates a volume of the fluid chamber 50 and thereby moves the engagement element 24 with respect to the support element 40 so as to apply or remove a tension acting on the connecting element 12 connected to the engagement element 24.

More specifically, the fluid chamber 50 comprises two distinct portions, a piston portion 52 delimited by and provided between the piston 48 and the engagement element 24 and an effective portion 54 delimited by and provided between the engagement element 24 and the support element 40. The piston portion 52 and the effective portion 54 are fluid-communicatively connected via two connecting bores 56 provided in the engagement element 24. A base area 58 of the piston portion 52 is provided with an effective cross section that is smaller than an effective cross section of a base area 60 of the effective portion 54. **In** this context, the "effective cross section" refers to an area that is perpendicular to the longitudinal direction 42 and thus perpendicular to a moving direction of both the piston 48 and the engagement element 24 relative to the support element 40. By this configuration, an actuating force applied to the piston 48 is hydraulically transformed into a tensioning force acting on the engagement element 24 which absolute value is higher compared to the actuating force acting on the piston 48.

For accommodating the piston 48, the engagement element 24 further includes a bore 62 extending along the longitudinal axis 42 of the screw tensioning device 10. Specifically, the bore 62 extends from the second end 30 of the cylindrical portion 26 to the recess 32 formed at the first end 28 of the cylindrical portion 26 of the engagement element 24 and is configured to receive the piston 48. A diameter of the bore 62 may be less than the diameter of the recess 32 which thus together form a stepped opening within the engagement element 24. Further, the bore 62 includes a variable diameter along the longitudinal axis 42. In other words, a wall of the engagement element 24 has a variable width along the length of the bore 62 such that the diameter of the bore 62 changes along the length of the bore 62. As depicted in Figure 2, the bore 62 includes a wider portion 64 and a narrower portion 66. At the wider portion 64, a distance between the piston 48 and the wall of the engagement element 24 is greater than at the narrower portion 66.

As shown in Figure 2, at the narrower portion 66, the piston 48 contacts the wall of the engagement element 24. The narrower portion 66 includes a groove 68 formed in the wall of the engagement element 24 and extending along a perimeter of the bore 62. A first sealing ring 70 is disposed in the groove 68 to form a seal joint between the piston 48 and the engagement element 24. The first sealing ring 70 is positioned between the piston 48 and the wall of the engagement element 24.

The engagement element 24 also includes a plate 72 extending radially from the cylindrical portion 26 of the engagement element 24. The plate 72 is positioned normal to the longitudinal axis 42 and is proximal to the second end 30 of the engagement element 24. The plate 72 is cylindrical in shape and forms a flange portion in proximity to the second end 30 of the engagement element 24.

The engagement element 24 is received at least partly within the support element 40. As set forth above, the engagement element 24 is arranged and adapted to be moved relative to the support element 40 to apply tension to or remove tension from the connecting element 12. The support element 40 includes a first cylindrical portion 74 and a second cylindrical portion 76 connected to one another by a connection portion 78. The first cylindrical portion 74 forms a lower part of the support element 40 to be positioned on the second component 20. The first cylindrical portion 74 surrounds a part of the connecting element 12, the first end 28 of the engagement element 24 and a portion of the cylindrical portion 26 of the engagement element 24. Specifically, the first cylindrical portion 74 surrounds the portion of the cylindrical portion 26 which is positioned underneath the plate 72 in the illustration depicted in Figure 2.

The second cylindrical portion 74 is spaced away from the first cylindrical portion 74 by the connection portion 78. The second cylindrical portion 76 surrounds the plate 72 of the engagement element 24 such that an inner surface of the second cylindrical portion 76 contacts an outer surface of the plate 72. In other words, the plate 72 is positioned within the second cylindrical portion 76 of the support element 40 and is configured to move relative to the second cylindrical portion 76.

Further, a third sealing ring 80 is positioned between the inner surface of the second cylindrical portion 76 and the outer surface of the plate 72 to prevent leakage of the fluid accommodated in the fluid chamber 50. Specifically, the third sealing ring 80 may be positioned in a groove formed either into the inner surface of the second cylindrical portion 76 or into the outer surface of the plate 72.

As can be gathered from Figure 2, the first cylindrical portion 74, the second cylindrical portion 76, and the connection portion 78 are hollow cylindrical portions having inner diameters different from each other, thereby forming stepped configurations with each other. The inner diameter of the connection portion 78 is smaller than the inner diameters of both the first cylindrical portion 74 and the second cylindrical portion 76. The connection portion 78 comprises an opening to guide the engagement element 24 within the support element 40, which opening has a diameter slightly larger than the diameter of the portion of the engagement element 24 guided by the support element 40. The connection portion 78 may further define a recess in which a second sealing ring 79 may be disposed for providing a sealing between the engagement element 24 and the connection portion 78.

The plate 72, the connection portion 78, and the second cylindrical portion 76 of the support element 40 together form the effective portion 54 of the fluid chamber 50. The effective portion 54 is fluidly connected to the bore 62 in the engagement element 24 via the connecting bores 56. The effective portion 54 is configured to receive the fluid from the piston portion 52 accommodated in the bore 62 of the engagement element 24 due to an axial movement of the piston 48 slidably positioned within the engagement element 24.

In this way, the fluid may move back and forth between the piston portion 52 and the effective portion 54 of the fluid chamber 50. During operation, the position of the piston 48 determines how much fluid is displaced from the piston portion 52 to the effective portion 54, and vice versa. As can be gathered from Figure 1, when the piston 48 is moved in an upward direction, i.e. in a direction facing away from the engagement element 24, the size of the piston portion 52 gets smaller. Accordingly, fluid is displaced therefrom into the effective portion 54 causing an increase of pressure in the effective portion 54 as more and more fluid enters thereinto. This pressure acts on the engagement element 24 which causes it to move in a direction facing away from the support element 40, i.e. along the longitudinal axis 42. This movement induces tensioning and thus lengthening of the connecting element 12. In this tensioned and lengthened state of the connecting element 12, an operator may tighten the nut 22 so as to position the nut 22 closer to the second component 20, i.e. to abut on the second component 20. This may be performed by reaching the nut 22 through openings in the support element 40 with a tool, an end of which may be inserted into the openings at the side of the nut 22 to turn and thus tighten or loosen the nut 22.

The piston 48 has a generally cylindrical shape with a head end 82 and a rod end 84 that are distal to one another and connected by a shaft 86. The head end 82 has a sealing portion 88 that is larger in diameter than the shaft 86. The diameter of the sealing portion 88 corresponds to a diameter of the bore 62 in the engagement element 24. The sealing portion 88 comprises a recess 90 that is circular in nature. A fourth sealing ring 92 is provided within the recess 90.

The first to fourth sealing ring 70, 79, 80, 92 may be made from metal, such as iron or steel, ceramics, fibrous materials, elastomer and/or plastic.

The piston 48 further includes a threaded portion 94 that is in threaded engagement with a cap 96 of the engagement element 24. The cap 96 is firmly fixed to the second end 30 of the cylindrical portion 26 by means of a threaded connection 98. Alternatively, the cap 96 may be pressed to the second end 30 of the cylindrical portion 26 of the engagement element 24.

In the shown configuration, the actuating element 46 is formed by the rod end 84 of the piston 48. As the piston 48 and thus the actuating element 46 are connected to the cap 96 by means of a threaded engagement, the actuating unit 44 is designed such that a rotational movement of the actuating element 46 is transformed into a translational movement of the piston 48 relative to the engagement element 24 which manipulates the volume of the fluid chamber 50 and thereby moves the engagement element 24 with respect to the support element 40. As a result, upon rotationally manipulating the actuation element 46, a tensioning or loosening of the connecting element 12 connected to the engagement element 24 is performed by means of the screw tensioning device 10.

The actuating element 46, at an end portion thereof, is provided with a first interface element 100 which is engaged with and designed complementary to a second interface element 102 of the electric actuator 13. Specifically, the first interface element 100 is a recessed connecting element in the form of a socket head which is form-fittingly connected to an actuated hex key rod constituted by the second interface element 102 of the electric actuator 13. By such a configuration, the electric actuator 13 is configured for rotationally actuating the actuating element 46 of the screw tensioning device 10.

Further, the effective portion 54 of the variable fluid chamber 50 is fluidly connected to a pressure sensor 104 for determining a pressure of the fluid present in the effective portion 54 and thus of the pressure prevailing in the fluid chamber 50. The pressure sensor 104 is connected to the control unit CPU via a signal line SL for transmitting determined values of the pressure prevailing in the fluid chamber 50 to the control unit CPU.

As shown in Figure 3, the screw tensioning device 10 further comprises a screwing element 106 which is configured for being connected to the nut 22 in a torque-transmitting manner. Specifically, the screwing element 106 is provided in the form of a connecting sleeve having a recessed shape for being coupled to the nut 22 in a form-fitting manner. In other words, the screwing element 106 includes a hexagonal recess 108, an inner surface of which is designed complementary to an outer surface of the nut 22. The screwing element 106 further comprises a through hole 110 opening into the hexagonal recess 108, wherein the connecting element 12 extends through both the hexagonal recess 108 and the through hole 110.

The screwing element 106 is rotationally mounted to the support element 40 by means of a bearing 112. Specifically, the bearing 112 provides for free rotation of the screwing element 106 relative to the support element 40 around the longitudinal axis 42 of the screw tensioning device 10, which coincides with a longitudinal axis of the engagement element 24 and the connecting element 12. Further, the bearing 112 is provided such that a translational movement between the screwing element 106 and the support element 40 is locked. For example, the bearing 108 may comprise a first and a second retaining ring 114, 116 installed in a groove included in a side wall of the support element 40, respectively, such that the screwing element 106 is interposed between the first and the second retaining ring 114, 116 along the longitudinal axis 42. In this way, the screwing element 106 is rotatable relative to the connecting element 12 around its longitudinal axis.

Furthermore, the screw tensioning device 10 comprises a screwing unit 118 for rotationally actuating the screwing element 106 relative to the engagement element 24 and thus relative to the support element 40 and the connecting element 12. For doing so, the screwing unit 118 is configured to apply an actuating torque to the screwing element 106 to tighten or untighten, i.e. screwing or unscrewing, the screw connection between the nut 22 and the connecting element 12. Thus, the actuating torque generated by the screwing unit 118 and applied to the screwing element 106 points in a direction coinciding with the longitudinal axis 42.

More specifically, the screwing unit 118 comprises a further actuating element 120 provided with a third interface element 122 at an end section thereof which protrudes from the outer surface of the support element 40 and which is formed by a hexagonal recess. Specifically, the third interface element 122 is a recessed connecting element in the form of a socket head which is form-fittingly connected to an actuated hex key rod constituted by a fourth interface element 124 of a further electric actuator 126.

**In** the shown configuration, the screwing unit 118 is configured to translate a rotational movement of the further actuating element 120 into a rotational movement of the screwing element 106 and thus of the nut 22. Specifically, the screwing unit 118 comprises a gear unit in the form of a bevel gear 128 for coupling the further actuating element 120 to the screwing element 106 in a torque-transmitting manner. In other words, the bevel gear 128 is configured to transform and input torque applied to the further actuating element 120 by means of the further electric actuator 126 into the actuating torque applied to the screwing element 106, wherein an absolute value of the actuating torque is higher compared to the input torque. Generally, in the context of the present disclosure, the term "bevel gear" may refer to any type of gears for torque-transmission between two rotatable elements which rotational axis are inclined, i.e. not parallel, to one another.

More specifically, the further actuating element 120 comprises a shaft rotatably mounted to the side wall of the support element 40, at the first end of which the third interface element 122 and at an opposed second end a gear wheel 130 is provided. A rotational axis of the nut actuating element 122 and thus of the gear wheel 130 is substantially perpendicular to a rotational axis of the screwing element 106 which coincides with the longitudinal axis 42.

Further, the screwing element 106 is provided with gear teeth 132 extending on a front surface 134 of the screwing element 106 which is oriented towards the engagement element 24. In other words, a surface normal of the front surface 134 points towards the engagement element 24. As can be gathered from Figure 2, the gear teeth 132 are arranged on the front surface 134 circumferentially around the longitudinal axis 42 and are designed complementary to the gear wheel 130 of the further actuating element 120. In this configuration, the gear wheel 130 of the further actuating element 120 and the gear teeth 132 of the screwing element 106 form complementary coupling interfaces of the bevel gear 134.

In the following, the operation of the control unit CPU for controlling the actuation of the screw tensioning devices 10 is further specified.

As set forth above, each one of the screw tensioning devices 10 comprises a pressure sensor 104 for determining a pressure prevailing in the fluid chamber 50 of each one of the screw tensioning devices 10. The pressure sensors 104 are connected to the control unit CPU via the signal line SL for transmitting the determined values of the pressure. Based on the thus transmitted values of the pressure, the control unit CPU is configured to actuate each one of the electric actuators 13 in dependence on the pressure prevailing in fluid chamber 50 of the associated screw tensioning device 10. By such a configuration, as the pressure prevailing in the fluid chamber 20 of the associated tensioning device 10 is indicative of, i.e. is proportional to, the tensioning force acting on its engagement element 24, the control unit CPU is configured to actuate the electric actuators 13 in dependence on a tensioning force acting on the engagement element 24 of the associated screw tensioning device 10.

Specifically, during tensioning operation of one tensioning device 10, the control unit CPU is configured to actuate the associated electric actuator 13 so as to increase the pressure prevailing in its fluid chamber 50 until a predefined upper threshold value for the pressure is reached. Accordingly, during release operation of one tensioning device 10, the control unit CPU is configured to actuate the electric actuator 13 associated thereto so as to decrease the pressure prevailing in its fluid chamber 50 until a predefined lower threshold value for the pressure is reached.

Additionally or alternatively, the control unit CPU is configured to actuate the electric actuators 13 in dependence on a position of the engagement element 24 relative to the support element 40 within the respective screw tensioning device 10. For doing so, each screw tensioning device 10 is equipped with a position sensor 136 for determining a relative position between the engagement element 24 and the support element 40. The position sensor 136 is connected to the control unit CPU via the signal line SL, via which it transmits the determined values of the relative position to the control unit CPU.

As set forth above, each of the screw tensioning devices 10 comprises the further electric actuator 126 for actuating the screwing unit 118 and thus for screwing the nut 22 on the connecting element 12 or for unscrewing the same. The further electric actuators 126 are connected to the control unit CPU via the control line CL, via which the control unit CPU directs control signals for actuating the further electric actuators 126. In other words, the control unit CPU is configured to actuate the further electric actuators 126. Each one of the screw tensioning device 10 comprises a further position sensor 138 for determining a change of a torsion angle between the screwing element 106 and the connecting element 12. In this configuration, the control unit CPU is configured to actuate the further electric actuators one and 26 in dependence on a change of the torsion angle between the screwing element 106 and the connecting element 12 upon actuation of the screwing unit 118.

Further, the control unit CPU is configured to actuate the further electric actuator 126 in dependence of the actuation of the electric actuator 13 associated to the same screw tensioning device 10. For example, the control unit CPU may be configured to actuate the further electric actuator 126 such that a torsion angle between the screwing element 106 and the engagement element 24 changes in dependence on, i.e. proportional to, a change of the pressure prevailing in the fluid chamber 50 and/or the position of the engagement element 24 relative to the support element 40.

Further, during operation of the screw tensioning devices 10, the control unit CPU is configured to record and store the values of a determined pressure transmitted by the pressure sensor 104 and/or to record the values of a relative position transmitted by the position sensor 136 and/or to record values of a change of torsion angle transmitted by the further position sensor 138. The different values may be transmitted to and stored by the control unit CPU at predefined intervals. In this way, the control unit CPU is enabled to record and store an assembly protocol, in which the process of tensioning and screwing or unscrewing the connecting element 12 is reported.

Further, each one of the screw tensioning device 10 may comprise a torque multiplier unit interposed between the actuating element 46 and the electric actuator 13, i.e. between the first and the second interface element 100, 102. The torque multiplier unit may be configured to transform an input torque applied to a transmission input element by the associated electric actuator 13 into an output torque applied to the actuating element 48, wherein the absolute value of the output torque is higher compared to the input torque. Specifically, the at least one torque multiplier unit may be equipped with a planetary gear, which in particular comprises a sun gear connected to the second interface element 102 of the electric actuator 13, at least one planet gear supported by a carrier connected to the first interface element 100 of the actuating element 46 and a ring gear fixed to the engagement element 24 in a torque-transmitting manner. Alternatively or additionally, the at least one torque multiplier unit may be equipped with a worm gear, which in particular comprises a worm screw connected to the second interface element 102 of the electric actuator 13 and a worm wheel connected to the first interface element 100 of the actuating element 46.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention as defined in the claims.

This is in particular the case with respect to the following optional features which may be combined with some or all embodiments, items and/or features mentioned before in any technically feasible combination.

A system may be provided for tensioning at least one connecting element fastened to a component to be tightened. The system may comprise at least one connecting element tensioning device, i.e. a screw tensioning device, having an engagement element connectable to the connecting element, and an actuating unit for translating a rotational movement applied to an actuating element into a translational movement of the engagement element relative to the component. The system may further comprise at least one electric actuator for rotationally actuating the actuating element of the at least one tensioning device and a control unit for actuating the at least one electric actuator.

By being provided with the at least one electric actuator and the control unit, the proposed system provides support for an operator during assembly and fixation of tensable connecting elements. For example, the use of the electric actuator in the system may simplify operation of the tensioning devices compared to known configurations. As to substance, known screw tensioning devices are operated by actuating an actuating element thereof by means of a tool, i.e. an electric screw driver. For doing so, during assembly operation, the screwdriver needs to be manually connected to the actuating element. By using the proposed system, however, the step of manually connecting a tool to the actuating element of the screw tensioning device by an operator may be omitted.

Furthermore, by being provided with the control unit, the system enables to, at least partially, autonomously perform or control the tensioning operation of the at least one tensioning device.

As a result, the provided system may be provided with an increased operability and may enable time-efficient assembly of tensable connecting elements.

Generally, the proposed system may be used, for example, in the field of steel constructions and various engine design applications, but is not limited thereto. Rather, the proposed system may be used in any application in which connecting elements are tightened by employing torque-free tensioning methods. In one example, the proposed system may be used to fasten a turbo charger to an engine crank case.

The proposed system may comprise one connecting element tensioning device, i.e. a device for tensioning a connecting element, also referred to as tensioning device. Alternatively, the system may comprise more than one tensioning device, i.e. at least two tensioning devices, e.g. four tensioning devices. To each one of the at least one tensioning device, a respective electric actuator may be associated. Thus, the proposed system may comprise one electric actuator or more than one electric actuator, for example, at least two electric actuators or four electric actuators which may be operated by a single control unit, i.e. a central control unit.

The tensioning device may be used for tensioning and/or loosening a connecting element. **In** other words, the tensioning device may be used to preload and/or untighten a connecting element. The connecting element may be a tensable connecting element. For example, the connecting element may be or comprise a screw, a bolt and/or any other type of tensable connecting element.

Further, the connecting element to be tensioned and/or loosened by the tensioning device may be intended and/or configured to tighten a component to which it is fastened. Alternatively or additionally, the connecting element to be tensioned and/or loosened by the proposed device may be intended and/or configured for connecting, i.e..e. force- and/or form-fittingly connecting, a first component to a second component. Accordingly, the tensioning device may be configured for tensioning a connecting element for connecting, i.e. force- and/or form-fittingly connecting, a first component to a second component. For doing so, a first end of the connecting element may be fixed to the first component, i.e. by means of a threaded engagement. For example, the first component may be an engine crank case and the second element may be a turbo charger mount.

**In** the following, an exemplary configuration of a tensioning device to be actuated by the proposed system, i.e. by means of the electric actuator and the control unit, is specified. The proposed system may be used for actuating at least one such tensioning device, but is not limited thereto. Rather, the proposed system may be configured to actuate other types of screw tensioning devices, i.e. screw tensioning devices which are operable by rotationally actuating an actuating element thereof.

The tensioning device may comprise the engagement element connectable to the connecting element. In other words, the engagement element is configured for being connected to the connecting element, i.e. in a force- and/or form-fitting manner. For doing so, the engagement element may comprise an engagement section for engaging with the connecting element. Specifically, the engagement section may be engaged with the connecting element by means of a threaded engagement. The engagement section may be provided at an end portion of the engagement element. Further, the engagement section may be configured to engage with a second end of the connecting element arranged opposed to the first end thereof. For example, the engagement section may be provided with a thread designed complementary to a thread formed at the second end of the connecting element.

The tensioning device may further comprise a support element configured to support the engagement element against the component to be tightened during tensioning operation of the tensioning device. In other words, the support element is configured to, during the tensioning operation of the tensioning device, abut on the component to be tightened, i.e. on the first or the second component. In this way, the support element is capable of generating a force, i.e. a reaction force, counteracting the pulling force exerted onto the connecting element connected to the engagement element during tension operation of the tensioning device. The tensioning device is provided such that the engagement element is translationally movable relative to the support element, i.e. along a longitudinal axis of the tensioning device. Upon translationally moving the engagement element relative to the support element, a tensioning force may be applied to or may be removed from the connecting element fixed to the engagement section. Thus, the tensioning device may be provided such that the engagement element is translationally movable relative to the support element so as to apply a tension to or to remove a tension from the connecting element.

The tensioning device may be provided with the actuating unit for translationally moving the engagement element relative to the support element and thus relative to the component to be tightened. For doing so, as set forth above, the actuating unit may comprise the actuating element and may be configured for translating a rotational movement applied to the actuating element into a translational movement of the engagement element relative to the component to be tightened and thus relative to the support element.

Specifically, the actuating unit may at least partly be a hydraulically driven. This means that the actuating unit may use a fluid for actuating the engagement element. In other words, a fluid is used to transfer motive power for the engagement element so as to move the engagement element relative to the component to be tightened and thus relative to the support element.

Specifically, the actuating unit may comprise a fluid chamber for receiving a fluid. Further, the actuating unit may comprise a piston which, at least partly, delimits the fluid chamber and which is translationally guided in the engagement element. In other words, the piston is accommodated and movable within the engagement element. More specifically, the fluid chamber may be defined or delimited at least partly by the piston and/or the engagement element and/or the support element. Specifically, the fluid chamber may at least partly be provided in a space between the piston and/or the engagement element and/or the support element. In this configuration, the actuating unit may be provided such that a translational movement of the piston manipulates a volume of the fluid chamber and thereby moves the engagement element with respect to the support element and thus with resect to the component to be tightened. In other words, upon translationally movement of the piston, a pressure prevailing in the fluid chamber may be manipulated, i.e. may be increased or decreased.

According to one configuration, the fluid chamber may comprise two distinct portions, namely a piston portion delimited by and provided between the piston and the engagement element and an effective portion delimited by and provided between the engagement element and the support element which are fluid-communicatively connected, i.e. via bores provided in the engagement element. An effective base area of the piston portion may be smaller than an effective base area of the effective portion which may be perpendicular to a movement direction of both the piston and the engagement element, i.e. perpendicular to the tensioning device's longitudinal axis. By such an arrangement, the actuating force applied onto the piston may be hydraulically transformed into a force acting on the engagement element which is higher compared to that one acting on the piston. In this way, the actuating unit transforms an actuating force into a pulling force acting on the connecting element which is multiplied compared to the actuating force the piston is exerted to.

Further, in the actuating unit, the actuating element and the piston may be arranged and interlinked to one another such that a rotational movement of the actuating element causes a translational movement of the piston, i.e. along the tensioning device's longitudinal axis, which manipulates the volume and thereby moves the engagement element relative to the component. An exemplary configuration of interlinking the actuating element and the piston is specified in connection with Figure 1 and its accompanying description.

In the following, the configuration and operation of the system is further specified which may be used to actuate at least one above described tensioning device. Further the system may be used to simultaneously and/or successively actuate at least two above described tensioning devices.

For actuating each one of the at least one tensioning device, the at least one electric actuator is provided. In the system, one electric actuator may be associated to a respective one of the tensioning devices. Thus, the number of tensioning devices may correspond to the number of electric actuators. Each electric actuator is connected to the actuating element of the associated tensioning device in a torque-transmitting manner such that, upon actuation of the electric actuator, the associated actuating element may be rotated so as to operate the tensioning device, i.e. to perform tensioning operation. Generally, the electric actuator may be an electrically driven component of the system, i.e. an electro motor, which is configured for moving the associated actuating element and thus for controlling the operation of the associated tensioning device.

The at least one electric actuator may be connected to the control unit, i.e. via an electric wire or wirelessly, so as to receive a control signal therefrom. In this way, the control unit controls the operation or actuation of the at least one electric actuator. In other words, by directing control signals to the at least one electric actuator, the control unit controls operation of the at least one electric actuator and thus of the at least one tensioning device associated thereto. Specifically, the control unit may be configured to selectively or simultaneously control operation of each one of the at least one electric actuator and thus the at least one tensioning device. In this context, the term "selectively" means that the control unit is configured to control operation of each one of the electric actuators independent from operation of the other electric actuators.

Specifically, the control unit may be configured to actuate the at least one electric actuator in dependence on a tensioning force acting on the engagement element of the associated tensioning device. For example, the control unit may actuate the at least one electric actuator until a predefined tensioning force is reached within the associated tensioning device which may ensure or enable proper installation of the connecting element.

A pressure prevailing in the fluid chamber of the associated tensioning device may be indicative of a tensioning force acting on its engagement element. Accordingly, the control unit may be configured to actuate the at least one electric actuator in dependence on a pressure prevailing in the fluid chamber of the at least one tensioning device. In other words, each one of the at least one electric actuator may be actuated in dependence on the pressure prevailing in the fluid chamber of the associated one of the at least one tensioning device. For example, during tensioning operation of one tensioning device, the control unit may be configured to actuate the electric actuator associated thereto so as to increase the pressure prevailing in its fluid chamber until a predefined upper threshold value for the pressure is reached. Further, during release operation of one tensioning device, the control unit may be configured to actuate the electric actuator associated thereto so as to decrease the pressure prevailing in its fluid chamber until a predefined lower threshold value for the pressure is reached.

Accordingly, for determining a pressure prevailing in the fluid chamber, at least one pressure sensor may be provided. The number of pressure sensors may correspond to the number of tensioning devices provided in the system. Thus, to each one of the tensioning devices, one pressure sensor may be associated which may be configured for determining a pressure prevailing in the fluid chamber of the associated tensioning device. The pressure sensor may further be configured for transmitting a determined value of the pressure prevailing in the fluid chamber of the associated tensioning device to the control unit. For transmitting the determined values of the pressure, the pressure sensor may be connected to the control unit by means of an electric wire or wirelessly.

Alternatively or additionally, the control unit may be configured to actuate the at least one electric actuator in dependence on a position of the engagement element relative to the support element of the at least one tensioning device. In other words, each one of the at least one electric actuator may be actuated in dependence on a relative position between the engagement element and the support element of the associated one of the at least one tensioning device. For example, during tensioning operation of one tensioning device, the control unit may be configured to actuate the electric actuator associated thereto so as to move the engagement element relative to the support element until a predefined distance is reached. Further, during release operation of one tensioning device, the control unit may be configured to actuate the electric actuator associated thereto so as to move the engagement element relative to the support element until an initial position of the engagement element is reached, i.e. a position of the engagement element prior to performing tensioning operation.

Accordingly, for determining a relative position between the engagement element and the support element, at least one position sensor may be provided. The number of position sensors may correspond to the number of tensioning devices provided in the system. Thus, to each one of the tensioning devices, one position sensor may be associated which may be configured for determining a relative position between the engagement element and the support element of the associated tensioning device. The position sensor may further be configured for transmitting a determined value of a relative position between the engagement element and the support element of the associated tensioning device to the control unit. For transmitting the determined values of the relative position, the position sensor may be connected to the control unit by means of an electric wire or wirelessly.

In a further development, the at least one tensioning device may further comprise a screwing element connectable to a nut engaged with the connecting element to be tensioned by the tensioning device. Further, the tensioning device may comprise a screwing unit for rotationally actuating the screwing element relative to the connecting element.

The screwing element may be provided for structurally coupling the nut engaged with the connecting element to the tensioning device, i.e. the screwing unit. Specifically, the screwing element may be configured for being connected to the nut in a torque-transmitting manner. For doing so, the screwing element may be configured for being connectable to the nut in a form- and/or force-fitting manner.

For example, the screwing element, at least partially, may be provided with a shape designed complementary to a shape of the nut. More specifically, the screwing element may be provided with a recess, an inner surface of which, at least partially, may be designed complementary to an outer surface, i.e. a lateral outer surface, of the nut so as to enable a form-fitting connection between the screwing element and the nut.

Specifically, the nut may be provided with a threaded hole for receiving and engaging with the connecting element. Further, the nut may be provided with an outer surface configured to engage with a tool, i.e. in a force- and or form-fitting manner. For example, the nut may be a hexagon nut. Accordingly, the screwing element may be provided with a recessed portion being designed complementary to the hexagonal outer surface of the nut so as to enable a form-fitting connection therebetween.

In a further development, the screwing element may be provided in the form of a connecting sleeve. The connecting sleeve may be provided with a recess for receiving the nut, the inner surface of which is designed complementary to the outer surface of the nut.

As set forth above, the screwing element may be rotationally actuated by means of the screwing unit. Accordingly, the screwing element may be coupled to the screwing unit in a torque-transmitting manner, particularly in a force- and/or form-fitting manner. For doing so, for example, a gear connection, a tongue-and-groove connection or any other type of connection between the screwing element and the screwing unit may be provided, which is suitable to transmit an actuating torque between the screwing element and the screwing unit. In this way, the screwing element may be rotationally moved relative to the engagement element and thus relative to the connecting element.

The screwing element may be provided with a coupling interface forming a part of the torque-transmitting connection between the screwing element and the screwing unit. The coupling interface may be designed complementary to a further coupling interface assigned to the screwing unit. For example, the coupling interface may be provided in the form of a gearing or gear teeth which particularly may be configured for being engaged with a complementary gearing or complementary gear teeth of the screwing unit. For example, the screwing element may be provided with the coupling interface, e.g. gearing or gear teeth, on an outer surface thereof. When the screwing element is provided in the form of the connecting sleeve, the coupling interface may be provided on a shell surface and/or on a front surface, i.e. facing the engagement element.

Further, the screwing element may be rotationally mounted in the tensioning device so as to be rotationally movable relative to the engagement element and thus relative to the connecting element. Specifically, the screwing element may be rotatably mounted to the engagement element and/or to the support element. For example, a bearing may be disposed between the connecting element and the engagement element or the support element providing for free rotation around the device's longitudinal axis, wherein a translational movement between the components is locked.

By being provided with the screwing element and the screwing unit, the tensioning device provides a means for tightening or untightening the nut engaged with the connecting element. As to substance, the screwing unit may be configured to, as set forth above, rotatably actuated to the screwing element relative to the engagement element and thus relative to the connecting element. In this way, as the screwing element may be connected to the nut in a torque-transmitting manner, the nut, i.e. together with the screwing element, is rotated relative to the engagement element and thus relative to the screw, thereby tightening or untightening the threaded connection provided between the nut and the connecting element. Accordingly, the screwing element may be rotatable relative to the connecting element around its longitudinal axis, which particularly coincides with the longitudinal axis of the tensioning device and/or the engagement element. An exemplary configuration for interlinking the screwing element to the screwing unit is described in connection with Figure 1 and the accompanying description.

Further, the system may comprise at least one further electric actuator for actuating the screwing unit of the at least one tensioning device. The number of further electric actuators may correspond to a number of tensioning devices provided in the system. Thus, to each one of the tensioning devices, one respective further electric actuator may be associated. Specifically, the further electric actuator may be configured for actuating the screwing unit so as to rotatably actuate the screwing element and thus to screw or unscrew the nut connected to the screwing element. Generally, the further electric actuator may be an electrically driven component of the system, i.e. an electro motor, which is configured for actuating the associated screwing unit.

The at least one further electric actuator may be connected to the control unit, i.e. via an electric wire or wirelessly, so as to receive a control signal therefrom. In this way, the control unit controls the operation or actuation of the at least one further electric actuator. In other words, the control unit is configured to actuate the at least one further electric actuator.

In a further development, the system is provided with at least one further position sensor for determining a change of a torsion angle between the screwing element and the connecting element upon actuation of the screwing unit. In other words, the at least one further position sensor is configured to determine an amount of a relative rotational movement between the screwing element and the connecting element upon actuating the screwing unit. The number of further position sensors may correspond to the number of tensioning devices provided in the system. Thus, to each one of the tensioning devices, one further position sensor may be associated. The further position sensor may be configured for transmitting a determined value of a change of a torsion angle to the control unit. For transmitting the determined values, the further position sensor may be connected to the control unit, i.e. by means of an electric wire or wirelessly.

In a further development, the control unit may be configured to, during operation of the system and at least one tensioning device, record values of a determined pressure transmitted by the at least one pressure sensor and/or values of a relative position transmitted by the at least one position sensor and/or values of a change of torsion angle transmitted by the at least one further position sensor. In this way, the control unit is enabled to record and store an assembly protocol, in which the process of tensioning and screwing or unscrewing the connecting element is reported. In this way, the system enables a time-efficient assembly which, at the same time, may be provided with an increased process reliability.

In a further development, each one of the at least one device may comprise a torque multiplier unit interposed between the actuating element and the electric actuator which is configured to transform an input torque applied to a transmission input element by the associated electric actuator into an output torque applied to the actuating element which absolute value is higher compared to the input torque. In this way, the actuating torque applied to the actuating element of the at least one tensioning device may be decreased, thereby enabling the use of compact, down scaled and less expensive electric actuators.

Specifically, the at least one torque multiplier unit may be equipped with a planetary gear, which in particular comprises a sun gear connected to the electric actuator via the transmission input element, at least one planet gear supported by a carrier connected to the actuating element and a ring gear fixed to a housing of the tensioning device in a torque-transmitting manner. Alternatively or additionally, the at least one torque multiplier unit may be equipped with a worm gear, which in particular comprises a worm screw connected to the electric actuator via the transmission input element and a worm wheel connected to the actuating element.

### Industrial Applicability

The proposed system may be used for actuating at least one screw tensioning device configured for fastening and/or loosening one tensable connecting element to a component to be tightened. The system may be used in different fields of application, such as in steel constructions or engine design applications. In the following, the use of the system 1 depicted in Figures 1 to 3 for simultaneously actuating two screw tensioning devices 10 is described in more detail.

To connect a first component 18, e.g. a crank case, to a second component 20, e.g. a turbo charger mount, using the system 1 as shown in Figure 1, the second component 20 is positioned next to the first component 18 and two connecting elements 12 in the form of screws are guided through respective holes in the second component 20 and connected to the first component 18 by means of a threaded connection. As a result, the connecting elements 12 extend from a side of the second component 20 which faces away from the first component 18. A nut 22 is screwed on each connecting element 12 from the second end 16 which is arrange opposite to the first end 14 of the connecting element 12 positioned in and fastened to the first component 18.

Then, each connecting element 12 is engaged with one respective screw tensioning device 10 such that the second end 16 of the connecting element 12 is fixed to the engagement element 24 to establish a threaded connection between the engagement element 24 and the second end 16 of the connecting element 12. By doing so, the nut 22 is received in the screwing element 106, thereby providing a form-fitting connection therebetween.

Thereafter, to apply a tension force to the connecting elements 12, the control unit CPU directs control signals to the electric actuators 13 so as to rotationally actuate the respective actuating elements 46 of the screw tensioning devices 10.

Upon rotationally actuating the actuating elements 46, in each tensioning device 10, the piston 48 is translationally actuated relative to the engagement element 24 in a direction facing away from the second component 22. By moving the piston 48 in this direction, i.e. upwards, the piston portion 52 of the fluid chamber 50 decreases and hydraulic fluid is pushed therefrom into the effective portion 54 of the fluid chamber 50 via the connecting bores 56. As a result, the effective portion 54 increases in volume, thereby exerting a pressure on the engagement element 24 which moves the same along the longitudinal axis 42 of the screw tensioning device 10 in respect to the support element 40. Accordingly, a distance between the engagement element 24 and the first and the second component 18, 20 increases, thereby tensioning and thus lengthening the connecting element 12.

This step is performed for each screw tensioning device 10 selectively, until a predefined pressure in the respective fluid chamber 50 of the screw tensioning devices 11 is reached.

In this tensioned condition of the connecting elements 12, for retaining the tension on the connecting element 18, the nut 22 is further tightened on the connecting element until the nut 22 abuts on the second component 22. Alternatively, for loosening the connecting elements, the nut 22 may be unscrewed. This is performed by means of the screwing unit 118, the actuation of which is controlled by means of the control unit CPU. Specifically, the control unit CPU directs control signals to the further electric actuators 126 so as to rotationally actuate the screwing unit 118, thereby rotating the nut 22 relative to the connecting element 12 so as to screw or unscrew the same on or from the connecting element 12.

Thereafter, the control unit CPU controls the electric actuators 13 so as to remove the tension force applied to the connecting elements 12. Specifically, this is performed by rotationally actuating the actuating elements 46 in a direction that is reversed compared to the rotational actuation of the same for generating the tension force as described above.

## Claims

1. System (1) for tensioning at least one connecting element (12) fastened to a component (18, 20) to be tightened, comprising:
at least one connecting element tensioning device (10) having an engagement element (24) connectable to the connecting element (12), and an actuating unit (44) for translating a rotational movement applied to an actuating element (46) into a translational movement of the engagement element (24) relative to the component (18, 20), wherein in a state in which the engagement element (24) is connected to the connecting element (12), the actuating unit (44) is configured to apply a tensioning force to the connecting element (12) upon translationally moving the engagement element (24), wherein the actuating unit (44) comprises a fluid chamber (50) for receiving a fluid, and a piston (48) which delimits the fluid chamber (50) and which is translationally guided in the engagement element (24), and wherein the actuating unit (44) is configured for manipulating a volume of the fluid chamber (50) by translationally actuating the piston (48) so as to move the engagement element (24) relative to a support element (40);
at least one electric actuator (13) for rotationally actuating the actuating element (46); and
a control unit configured to selectively control operation of the electric actuator (13) by directing control signals thereto, wherein the control unit is configured to actuate the at least one electric actuator (13) in dependence on a pressure prevailing in the fluid chamber (50) of the at least one tensioning device (10).

2. System according to claim 1, which comprises at least two tensioning devices (10) and at least two electric actuators (13), each of which is connected to the actuating element (46) of one of the at least two tensioning devices (10).

3. System according to claim 1 or 2, wherein the control unit (CPU) is configured to actuate the at least one electric actuator (13) in dependence on a tensioning force acting on the engagement element (24) of the at least one tensioning device (10).

4. System according to any of claims 1 to 3, wherein during tensioning operation of the at least one tensioning device (10), the control unit is configured to actuate the at least one electric actuator (13) so as to increase the pressure prevailing in the fluid chamber (50) of the at least one tensioning device (10) until a predefined upper threshold value for the pressure is reached.

5. System according to any of claims 1 to 4, wherein during release operation of the at least one tensioning device (10), the control unit is configured to actuate the at least one electric actuator (13) so as to decrease the pressure prevailing in the fluid chamber (50) of the at least one tensioning device (10) until a predefined lower threshold value for the pressures is reached.

6. System according to any one of claims 1 to 5, further comprising at least one pressure sensor (104) for determining a pressure prevailing in the fluid chamber (50) of the at least one tensioning device (10) and for transmitting a determined value of the pressure to the control unit.

7. System according to any one of claim 1 to 6, wherein the support element (40) is configured to support the engagement element (24) against the component (20) during tensioning operation of the tensioning device (10), wherein the engagement element (24) is translationally movable relative to the support element (40) so as to apply a tension to or to remove a tension from a connecting element (12) connected to the engagement element (24), and wherein the control unit is configured to actuate the at least one electric actuator (13) in dependence on a position of the engagement element (24) relative to the support element (40) of the at least one tensioning device (10).

8. System according to claim 7, further comprising at least one position sensor (136) for determining a relative position between the engagement element (24) and the support element (40) of the at least one tensioning device (10) and for transmitting a determined value of a relative position to the control unit.

9. System according to any one of claims 1 to 8, wherein the at least one tensioning device (10) further comprises a screwing element (106) connectable to a nut (22) engaged with the connecting element (12) and a screwing unit (118) for rotationally actuating the screwing element (106) relative to the connecting element (12), wherein the system (1) further comprises at least one further electric actuator (126) for actuating the screwing unit (118) of the at least one tensioning device (10), and wherein the control unit is configured to actuate the at least one further electric actuator (126).

10. System according to claim 9, further comprising at least one further position sensor (138) for determining a change of a torsion angle between the screwing element (106) and the connecting element (12) of the at least one tensioning device (10) upon actuating the screwing unit (118) and for transmitting the determined value of a change of a torsion angle to the control unit.

11. System according to any one of claims 6 to 10, wherein the control unit is configured to, during operation of the at least one tensioning device (10), record values of a determined pressure transmitted by the at least one pressure sensor (104) and/or values of a relative position transmitted by the at least one position sensor (136) and/or values of a change of torsion angle transmitted by the at least one further position sensor (138).

12. System according to any one of claims 1 to 11, wherein each of the at least one tensioning device (10) comprises a torque multiplier unit interposed between the actuating element (46) and the electric actuator (13) which is configured to transform an input torque applied to a transmission input element by means of the electric actuator (13) into an output torque applied to the actuating element (46) which absolute value is higher compared to the input torque.

## Patentansprüche

1. System (1) zum Spannen mindestens eines Verbindungselements (12), das an einer festzuziehenden Komponente (18, 20) befestigt ist, umfassend:
mindestens eine Verbindungselementspannvorrichtung (10), die ein Eingriffselement (24), das mit dem Verbindungselement (12) verbindbar ist, und eine Antriebseinheit (44) zum Umsetzen einer Drehbewegung, die auf ein Antriebselement (46) ausgeübt wird, in eine Umsetzbewegung des Eingriffselements (24) relativ zu der Komponente (18, 20) aufweist, wobei, in einem Zustand, in dem das Eingriffselement (24) mit dem Verbindungselement (12) verbunden ist, die Antriebseinheit (44) konfiguriert ist, um bei einem umsetzenden Bewegen des Eingriffselements (24) eine Spannkraft auf das Verbindungselement (12) auszuüben, wobei die Antriebseinheit (44) eine Fluidkammer (50) zum Aufnehmen eines Fluids und einen Kolben (48) umfasst, der die Fluidkammer (50) begrenzt, und der in dem Eingriffselement (24) umsetzend geführt ist, und wobei die Antriebseinheit (44) zum Manipulieren eines Volumens der Fluidkammer (50) durch umsetzendes Antreiben des Kolbens (48) konfiguriert ist, um das Eingriffselement (24) relativ zu einem Stützelement (40) zu bewegen;
mindestens einen elektrischen Antrieb (13) zum Drehantreiben des Antriebselements (46); und
eine Steuereinheit, die konfiguriert ist, um einen Betrieb des elektrischen Antriebs (13) selektiv zu steuern, durch ein Leiten von Steuersignalen dorthin, wobei die Steuereinheit konfiguriert ist, um den mindestens einen elektrischen Antrieb (13) in Abhängigkeit von einem Druck anzutreiben, der in der Fluidkammer (50) der mindestens einen Spannvorrichtung (10) herrscht.

2. System nach Anspruch 1, das mindestens zwei Spannvorrichtungen (10) und mindestens zwei elektrische Antriebe (13) umfasst, die jeweils mit dem Antriebselement (46) einer der mindestens zwei Spannvorrichtungen (10) verbunden sind.

3. System nach Anspruch 1 oder 2, wobei die Steuereinheit (CPU) konfiguriert ist, um den mindestens einen elektrischen Antrieb (13) in Abhängigkeit von einer Spannkraft anzutreiben, die auf das Eingriffselement (24) der mindestens einen Spannvorrichtung (10) wirkt.

4. System nach einem der Ansprüche 1 bis 3, wobei, während des Spannbetriebs der mindestens einen Spannvorrichtung (10), die Steuereinheit konfiguriert ist, um den mindestens einen elektrischen Antrieb (13) anzutreiben, um den Druck, der in der Fluidkammer (50) der mindestens einen Spannvorrichtung (10) herrscht, zu erhöhen, bis ein vordefinierter oberer Schwellenwert für den Druck erreicht ist.

5. System nach einem der Ansprüche 1 bis 4, wobei, während eines Freigabebetriebs der mindestens einen Spannvorrichtung (10), die Steuereinheit konfiguriert ist, um den mindestens einen elektrischen Antrieb (13) anzutreiben, um den Druck, der in der Fluidkammer (50) der mindestens einen Spannvorrichtung (10) herrscht, zu verringern wird, bis ein vordefinierter unterer Schwellenwert für die Drücke erreicht ist.

6. System nach einem der Ansprüche 1 bis 5, ferner umfassend mindestens einen Drucksensor (104) zum Bestimmen eines Drucks, der in der Fluidkammer (50) der mindestens einen Spannvorrichtung (10) herrscht, und zum Übertragen eines bestimmten Druckwerts an die Steuereinheit.

7. System nach einem der Ansprüche 1 bis 6, wobei das Stützelement (40) konfiguriert ist, um das Eingriffselement (24) während eines Spannbetriebs der Spannvorrichtung (10) gegen die Komponente (20) abzustützen, wobei das Eingriffselement (24) relativ zu dem Stützelement (40) umsetzend bewegbar ist, um eine Spannung auf ein Verbindungselement (12), das mit dem Eingriffselement (24) verbunden ist, auszuüben oder eine Spannung davon zu lösen, und wobei die Steuereinheit konfiguriert ist, um den mindestens einen elektrischen Antrieb (13) in Abhängigkeit einer Position des Eingriffselements (24) relativ zu dem Stützelement (40) der mindestens einen Spannvorrichtung (10) anzutreiben.

8. System nach Anspruch 7, ferner umfassend mindestens einen Positionssensor (136) zum Bestimmen einer relativen Position zwischen dem Eingriffselement (24) und dem Stützelement (40) der mindestens einen Spannvorrichtung (10) und zum Übertragen eines bestimmten Werts einer relativen Position an die Steuereinheit.

9. System nach einem der Ansprüche 1 bis 8, wobei die mindestens eine Spannvorrichtung (10) ferner ein Schraubelement (106), das mit einer Mutter (22) verbindbar ist, die mit dem Verbindungselement (12) in Eingriff steht, und eine Schraubeinheit (118) zum Drehantreiben des Schraubelements (106) relativ zu dem Verbindungselement (12) umfasst, wobei das System (1) ferner mindestens einen weiteren elektrischen Antrieb (126) zum Antreiben der Schraubeinheit (118) der mindestens einen Spannvorrichtung (10) umfasst, und wobei die Steuereinheit konfiguriert ist, um den mindestens einen weiteren elektrischen Antrieb (126) anzutreiben.

10. System nach Anspruch 9, ferner umfassend mindestens einen weiteren Positionssensor (138) zum Bestimmen einer Änderung eines Torsionswinkels zwischen dem Schraubelement (106) und dem Verbindungselement (12) der mindestens einen Spannvorrichtung (10) bei dem Antreiben der Schraubeinheit (118) und zum Übertragen des bestimmten Werts einer Änderung eines Torsionswinkels an die Steuereinheit.

11. System nach einem der Ansprüche 6 bis 10, wobei die Steuereinheit konfiguriert ist, um während des Betriebs der mindestens einen Spannvorrichtung (10) Werte eines bestimmten Drucks, die durch den mindestens einen Drucksensor (104) übertragen werden, und/oder Werte einer relativen Position, die durch den mindestens einen Positionssensor (136) übertragen werden, und/oder Werte einer Änderung eines Torsionswinkels aufzuzeichnen, die durch den mindestens einen weiteren Positionssensor (138) übertragen werden.

12. System nach einem der Ansprüche 1 bis 11, wobei jede der mindestens einen Spannvorrichtung (10) eine Drehmomentvervielfachereinheit umfasst, die zwischen dem Antriebselement (46) und dem elektrischen Antrieb (13) angeordnet ist und konfiguriert ist, um ein Eingangsdrehmoment, das auf ein Getriebeeingangselement mittels des elektrischen Antriebs (13) ausgeübt wird, in ein Ausgangsdrehmoment umzuwandeln, das auf das Antriebselement (46) ausgeübt wird, dessen Absolutwert im Vergleich zu dem Eingangsdrehmoment höher ist.

## Revendications

1. Système (1) de tension d'au moins un élément de liaison (12) fixé à un composant (18, 20) à serrer, comprenant :
au moins un dispositif de tension d'élément de liaison (10) ayant un élément de mise en prise (24) pouvant être relié à l'élément de liaison (12), et une unité d'actionnement (44) destinée à translater un déplacement de rotation appliqué à un élément d'actionnement (46) en un déplacement de translation de l'élément de mise en prise (24) par rapport au composant (18, 20), dans lequel dans un état où l'élément de mise en prise (24) est relié à l'élément de liaison (12), l'unité d'actionnement (44) est conçue pour appliquer une force de tension à l'élément de liaison (12) lors du déplacement en translation de l'élément de mise en prise (24), dans lequel l'unité d'actionnement (44) comprend une chambre de fluide (50) destinée à recevoir un fluide, et un piston (48) qui délimite la chambre de fluide (50) et qui est guidé en translation dans l'élément de mise en prise (24), et dans lequel l'unité d'actionnement (44) est conçue pour manipuler un volume de la chambre de fluide (50) en actionnant en translation le piston (48) de manière à déplacer l'élément de mise en prise (24) par rapport à un élément de soutien (40) ;
au moins un actionneur électrique (13) destiné à actionner en rotation l'élément d'actionnement (46) ; et
une unité de commande conçue pour commander sélectivement une opération de l'actionneur électrique (13) en envoyant des signaux de commande à celui-ci, dans lequel l'unité de commande est conçue pour actionner l'au moins un actionneur électrique (13) en fonction d'une pression dominante dans la chambre de fluide (50) de l'au moins un dispositif de tension (10).

2. Système selon la revendication 1, qui comprend au moins deux dispositifs de tension (10) et au moins deux actionneurs électriques (13), dont chacun est relié à l'élément d'actionnement (46) de l'un des au moins deux dispositifs de tension (10).

3. Système selon la revendication 1 ou 2, dans lequel l'unité de commande (CPU) est conçue pour actionner l'au moins un actionneur électrique (13) en fonction d'une force de tension agissant sur l'élément de mise en prise (24) de l'au moins un dispositif de tension (10).

4. Système selon l'une quelconque des revendications 1 à 3, dans lequel pendant l'opération de tension de l'au moins un dispositif de tension (10), l'unité de commande est conçue pour actionner l'au moins un actionneur électrique (13) de manière à augmenter la pression dominante dans la chambre de fluide (50) de l'au moins un dispositif de tension (10) jusqu'à ce qu'une valeur seuil supérieure prédéfinie pour la pression soit atteinte.

5. Système selon l'une quelconque des revendications 1 à 4, dans lequel pendant l'opération de relâchement de l'au moins un dispositif de tension (10), l'unité de commande est conçue pour actionner l'au moins un actionneur électrique (13) de manière à diminuer la pression dominante dans la chambre de fluide (50) de l'au moins un dispositif de tension (10) jusqu'à ce qu'une valeur seuil inférieure prédéfinie pour les pressions soit atteinte.

6. Système selon l'une quelconque des revendications 1 à 5, comprenant en outre au moins un capteur de pression (104) destiné à déterminer une pression dominante dans la chambre de fluide (50) de l'au moins un dispositif de tension (10) et à transmettre une valeur déterminée de la pression à l'unité de commande.

7. Système selon l'une quelconque des revendications 1 à 6, dans lequel l'élément de soutien (40) est conçu pour soutenir l'élément de mise en prise (24) contre le composant (20) pendant une opération de tension du dispositif de tension (10), dans lequel l'élément de mise en prise (24) est déplaçable en translation par rapport à l'élément de soutien (40) de manière à appliquer une tension à ou à éliminer une tension d'un élément de liaison (12) relié à l'élément de mise en prise (24), et dans lequel l'unité de commande est conçue pour actionner l'au moins un actionneur électrique (13) en fonction d'une position de l'élément de mise en prise (24) par rapport à l'élément de soutien (40) de l'au moins un dispositif de tension (10).

8. Système selon la revendication 7, comprenant en outre au moins un capteur de position (136) destiné à déterminer une position relative entre l'élément de mise en prise (24) et l'élément de soutien (40) de l'au moins un dispositif de tension (10) et à transmettre une valeur déterminée d'une position relative à l'unité de commande.

9. Système selon l'une quelconque des revendications 1 à 8, dans lequel l'au moins un dispositif de tension (10) comprend en outre un élément de vissage (106) pouvant être relié à un écrou (22) en prise avec l'élément de liaison (12) et une unité de vissage (118) destinée à actionner en rotation l'élément de vissage (106) par rapport à l'élément de liaison (12), dans lequel le système (1) comprend en outre au moins un autre actionneur électrique (126) destiné à actionner l'unité de vissage (118) de l'au moins un dispositif de tension (10), et dans lequel l'unité de commande est conçue pour actionner l'au moins un autre actionneur électrique (126).

10. Système selon la revendication 9, comprenant en outre au moins un autre capteur de position (138) destiné à déterminer un changement d'un angle de torsion entre l'élément de vissage (106) et l'élément de liaison (12) de l'au moins un dispositif de tension (10) lors de l'actionnement de l'unité de vissage (118) et à transmettre la valeur déterminée d'un changement d'un angle de torsion à l'unité de commande.

11. Système selon l'une quelconque des revendications 6 à 10, dans lequel l'unité de commande est conçue pour, pendant l'opération de l'au moins un dispositif de tension (10), enregistrer des valeurs d'une pression déterminée transmises par l'au moins un capteur de pression (104) et/ou des valeurs d'une position relative transmises par l'au moins un capteur de position (136) et/ou des valeurs d'un changement d'angle de torsion transmises par l'au moins un autre capteur de position (138).

12. Système selon l'une quelconque des revendications 1 à 11, dans lequel chacun des au moins un dispositif de tension (10) comprend une unité multiplicatrice de couple interposée entre l'élément d'actionnement (46) et l'actionneur électrique (13) qui est conçue pour transformer un couple d'entrée appliqué à un élément d'entrée de transmission au moyen de l'actionneur électrique (13) en un couple de sortie appliqué à l'élément d'actionnement (46) dont la valeur absolue est plus élevée par rapport au couple d'entrée.
